(19) Europäisches Patentamt
European Patent Office
Office européen des brevets

(11) Publication number: **0 330 988 B1**

## (12) EUROPEAN PATENT SPECIFICATION

(45) Date of publication of patent specification: **11.01.95**  (51) Int. Cl.⁶: **C08J 9/14**

(21) Application number: **89103075.1**

(22) Date of filing: **22.02.89**

(54) **Closed-cell polyurethane foam compositions.**

(30) Priority: **22.02.88 US 158442**

(43) Date of publication of application:
**06.09.89 Bulletin 89/36**

(45) Publication of the grant of the patent:
**11.01.95 Bulletin 95/02**

(84) Designated Contracting States:
**AT BE CH DE ES FR GB GR IT LI LU NL SE**

(56) References cited:
**US-A- 4 624 970**

**CHEMICAL ABSTRACTS, vol. 107, 1987, page 49, abstract no. 41040j, Columbus,Ohio, US; & JP-A-62 18 418**

(73) Proprietor: **E.I. DU PONT DE NEMOURS AND COMPANY**
**1007 Market Street**
**Wilmington**
**Delaware 19898 (US)**

(72) Inventor: **Bartlett, Philip Lee**
**802 Wynnewood Avenue**
**Wilmington**
**Delaware 19803 (US)**
Inventor: **Creazzo, Joseph Anthony**
**5 Ouail Court**
**Shipley Farms**
**Wilmington**
**Delaware 19810 (US)**

(74) Representative: **Abitz, Walter, Dr.-Ing. et al**
**Patentanwälte Abitz & Partner**
**Postfach 86 01 09**
**D-81628 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to closed-cell polyurethane foams expanded with mixtures of blowing agents comprising the two-carbon hydrogen-containing halocarbons HCFC-123, HCFC-123a and HCFC-141b and selected shrinkage-minimizing halocarbons to produce minimal shrinkage polyurethane foams.

In 1985, about $63.5 \times 10^6$ kg (140 MM lbs.) of blowing agents (primarily CFC-11 and CFC-12) were used in the U.S. to produce all types of insulation foams. Of this total volume, about 70% or $45.4 \times 10^6$ kg (100 MM lbs.) were used to make polyurethane foam. Closed-cell polyurethane foam is the most energy efficient insulating material available, having an R value of approximately 2.84 per cm (7.2 per inch); whereas fiberglass has an R value of approximately 1.22 per cm (3.1 per inch).

Closed-cell polyurethane foams are widely used for insulation purposes in building construction and in the manufacture of energy efficient electrical appliances. In the construction industry, polyurethane (polyisocyanurate) board stock is used in roofing and siding for its insulation and load-carrying capabilities. Poured and sprayed polyurethane foams are also used in construction. Sprayed polyurethane foams are widely used for insulating large structures such as storage tanks, etc. Pour-in-place urethane foams are used, for example, in appliances such as refrigerators and freezers plus they are used in making refrigerated trucks and rail cars.

In the early 1970s, concern began to be expressed that the stratospheric ozone layer (which provides protection against penetration of the earth's atmosphere by ultraviolet radiation) was being depleted by chlorine atoms introduced to the atmosphere from the release of fully halogenated chlorofluorocarbons. These chlorofluorocarbons are widely used as propellants in aerosols, as blowing agents for foams, as refrigerants and as cleaning/drying solvent systems. Because of the great chemical stability of fully halogenated chlorofluorocarbons, according to the ozone depletion theory, these compounds do not decompose in the earth's atmosphere but reach the stratosphere where they slowly degrade liberating chlorine atoms which in turn react with the ozone.

Concern reached such a level that in 1978 the U.S. Environmental Protection Agency (EPA) placed a ban on nonessential uses of fully halogenated chlorofluorocarbons as aerosol propellants. This ban resulted in a dramatic shift in the U.S. away from chlorofluorocarbon propellants (except for exempted uses) to primarily hydrocarbon propellants. However, since the rest of the world did not join the U.S. in this aerosol ban, the net result has been to shift the uses of chlorofluorocarbons in aerosols out of the U.S., but not to permanently reduce the world-wide total chlorofluorocarbon production, as sought. In fact, in the last few years the total amount of chlorofluorocarbons manufactured has exceeded the level produced in 1978 (before the U.S. ban).

During the period of 1978-1987, much research was conducted to study the ozone depletion theory. Because of the complexity of atmospheric chemistry, many questions relating to this theory remain unanswered. However, if the theory is valid, the health risks which would result from depletion of the ozone layer are significant. This, coupled with the fact that world-wide production of chlorofluorocarbons has increased has resulted in international efforts to reduce chlorofluorocarbon use. Particularly, in September 1987, the United Nations through its Environment Programme (UNEP) issued a tentative proposal calling for a 50 percent reduction in world-wide production of fully halogenated chlorofluorocarbons by the year 2000.

Because of this proposed reduction in availability of fully halogenated chlorofluorocarbons such as CFC-11 and CFC-12, alternative, more environmentally acceptable, products are urgently needed.

As early as the 1970s with the initial emergence of the ozone depletion theory, it was known that the introduction of hydrogen into previously fully halogenated chlorofluorocarbons markedly reduced the chemical stability of these compounds. Hence, these now destabilized compounds would be expected to degrade in the atmosphere and not reach the stratosphere and the ozone layer. The accompanying Table lists the ozone depletion potential for a variety of fully and partially halogenated halocarbons. Greenhouse potential data (potential for reflecting infrared radiation (heat) back to earth and thereby raising the earth's surface temperature) are also shown.

| OZONE DEPLETION AND GREENHOUSE POTENTIALS | | |
|---|---|---|
| Blowing Agent | Ozone Depletion Potential* | Greenhouse Potential** |
| CFC-11 ($CFCl_3$) | 1.0 | 0.4 |
| CFC-12 ($CF_2Cl_2$) | 0.9 | 1.0 |
| HCFC-22 ($CHF_2Cl$) | 0.05 | 0.07 |
| HCFC-123 ($CF_3CHCl_2$) | less than 0.05 | less than 0.1 |
| HCFC-124 ($CF_3CHFCl$) | less than 0.05 | less than 0.1 |
| HFC-134a ($CF_3CH_2F$) | 0 | less than 0.1 |
| HCFC-141b ($CFCl_2CH_3$) | less than 0.05 | less than 0.1 |
| HCFC-142b ($CF_2ClCH_3$) | less than 0.5 | less than 0.2 |
| HFC-152a ($CHF_2CH_3$) | 0 | less than 0.1 |

\* Calculated relative to CFC-11.
\*\* Calculated relative to CFC-12.

Halocarbons such as HCFC-123, HCFC 123a and HCFC-141b are environmentally acceptable in that they theoretically have minimal effect on ozone depletion. However, these halocarbons cause cell shrinkage or collapse when used as blowing agents for closed-cell polyurethane foams. This shrinkage is particularly apt to occur with relatively flexible polymers such as those prepared from polyether polyols and when the closed-cell polyurethane foam is a low density foam, e.g., less than about $3.2 \times 10^{-2}$ g/cm$^3$ (2.0 lbs./cu.ft.), particularly about $2.4 \times 10^{-2}$ g/cm$^3$ (1.5 lbs./cu.ft.). As compared to higher density foams, the production of lower density foams generally requires a larger quantity of blowing agent and a smaller amount of polymer which results in thinner and, consequently, weaker cell walls. In addition, the halocarbon blowing agents may migrate from the cell cavities to the bulk polymer and soften or plasticize the already thin cell walls.

Finally, foam cells are most fragile just after preparation as the temperature of the foamed polyurethane returns to ambient. At the temperature at which foams are made, which normally reaches about (93-149 °C) (200-300°F) because of the exothermic reaction between polyol and isocyanate, the cells contain blowing agent at one atmosphere pressure. However, after cooling to ambient temperature, foams typically contain blowing agent at less than atmospheric pressure . Since this creates a partial vacuum in the cells, they will shrink to smaller volumes if the cell walls are weak, soft or very thin. Generally, this shrinkage occurs within 72 hours of preparation and before the polymer in the cell walls fully cures and hardens. This shrinkage or collapse of foams is undesirable and results in:

(a) loss of insulation value;

(b) loss of structural strength;

(c) pulling away of foam from walls, e.g., walls of a refrigerator.

Such shrinkage or collapse of polyurethane insulation foam makes these halocarbons unattractive as blowing agents. It might be possible, however, to reformulate the polyurethane foam formulations to be more compatible with these halocarbons. Such a solution would require a complete study of the preparation/properties/uses of new formulations and would require a considerable period of time for development. Long term, new or modified polymer systems designed for use with these halocarbons and other more polymer-soluble blowing agents will most likely be developed; however, what is needed, as fully halogenated chlorofluorocarbon blowing agents face regulation and usage restriction, are blowing agent systems which can be used in present, essentially unmodified, polyurethane foam formulations.

JP-A-62-18418 discloses a foaming agent composition for rigid polyurethane foams consisting of trichlorofluoromethane and dichlorotrifluoroethane. The dichlorotrifluoroethane is used in those compositions to improve the solubility of trichlorofluoromethane in a polyol premix and the stability of the premix.

A process has been discovered comprising

mixing at least 1 wt. percent and less than about 60 wt. percent of a shrinkage-minimizing halocarbon selected from the group consisting of CFC-11, CFC-12, HCFC-22, HFC-32, CFC-113, CFC-114, HCFC-124, HCFC-133a, HFC-134a, HCFC-142b and HFC-152a and a minimum of about 40 wt. percent of a two-carbon hydrogen-containing halocarbon selected from the group consisting of HCFC-123, HCFC-123a and HCFC-141b, to form a mixture with the exception of mixtures of CFC-11 and HCFC-123 or HCFC-123a, and, thereafter,

using the mixture to produce a minimal shrinkage closed-cell polyurethane foam.

Also included are minimal shrinkage closed-cell polyurethane foams which have been formed by the process of the invention.

Preferred are processes wherein the mixture is first dissolved in a polyol containing a surfactant and catalyst to form a B-side system which is, in turn, reacted with isocyanates to produce said polyurethane foam, said mixture comprising about 2 to 60 wt. percent of the B-side system, or wherein the mixture is combined with surfactant and an isocyanate to form one component and, thereafter, the component is reacted with a polyol and a catalyst to produce said closed-cell polyurethane foam.

Preferably polyurethane foams with a density of about $2.4 \times 10^{-2}$ to $4.0 \times 10^{-2}$ g/cm$^3$ (1.5 to 2.5 pounds per cubic foot) or about $1.9 \times 10^{-2}$ to $2.4 \times 10^{-2}$ g/cm$^3$ (1.2 to 1.5 pounds per cubic foot) are prepared by the process of the invention.

By minimal shrinkage closed-cell polyurethane foam is meant a closed-cell polyurethane foam which is formed using the mixture of the instant invention which foam decreases in volume by less than 10 percent after it is allowed to stand at atmospheric pressure for at least 72 hours after formation as compared to the foam's original volume.

The closed-cell polyurethane foams of the instant invention include all types of closed-cell polyurethane foams including:

1. pour-in-place appliance foams, normally made by the reaction of a polyether polyol with an isocyanate, approximately on a 1/1 isocyanate equivalent/hydroxyl equivalent basis. An isocyanate index of 105 is common. The isocyanate chosen may be of the toluene diisocyanate (TDI) or polymethylene polyphenyl isocyanate (MDI) type. The polyether polyols may be various polyhydroxy compounds which may be polyethylene glycols, polypropylene glycols, mixed PEO-PPO-based glycols, reaction products of sugars or aminoalcohols and ethylene oxide and/or propylene oxide.

2. board stock (isocyanurate) foams, normally made by the reaction of an aromatic polyester polyol (may be a mixture of polyester/polyether polyols) with an isocyanate (MDI) in the ratio of isocyanate equivalent to hydroxyl equivalent of 1.5-6.0. Aromatic polyester polyols may differ considerably in structure. For example, a polyester polyol may be made by the transesterification of polyethylene terephthalate (PET) scrap with a glycol such as diethylene glycol or a polyester polyol may be made from phthalic anhydride plus a glycol.

Unexpectedly, the two-carbon hydrogen-containing halocarbons used in the process of this invention, 1,1-dichloro-2,2,2-trifluoroethane (HCFC-123), 1,2-dichloro-1,1,2-trifluoroethane (HCFC-123a) and 1,1-dichloro-1-fluoroethane (HCFC-141b), in combination with selected shrinkage-minimizing halocarbons, trichloromonofluoromethane (CFC-11), dichlorodifluoromethane (CFC-12), monochlorodifluoromethane (HCFC-22), difluoromethane (HFC-32), 1,1,2-trichlorotrifluoroethane (CFC-113), 1,2-dichlorotetrafluoroethane (CFC-114), 1-chloro-1,2,2,2-tetrafluoroethane (HCFC-124), 1-chloro-2,2,2-trifluoroethane (HCFC-133a), 1,1,1,2-tetrafluoroethane (HFC-134a), 1-chloro-1,1-difluoroethane (HCFC-142b) and 1,1-difluoroethane (HFC-152a) (with the exception of mixtures of CFC-11 and HCFC-123 or HCFC-123a), form blowing agent mixtures which can produce minimal shrinkage closed-cell polyurethane foams. The use of the two-carbon hydrogen-containing halocarbons as the sole blowing agents produce closed-cell polyurethane foams which have much greater shrinkage. The mixtures of the instant invention produce closed-cell polyurethane foams which, unexpectedly, shrink less than one would expect from a simple mixing of the two-carbon hydrogen-containing halocarbons with the selected shrinkage-minimizing halocarbons.

The two-carbon hydrogen-containing halocarbons of the instant invention, HCFC-123, HCFC-123a and HCFC-141b, are known in the art and can be prepared by known methods. The shrinkage-minimizing halocarbons of the instant invention, CFC-11, CFC-12, HCFC-22, HFC-32, CFC-113, CFC-114, HCFC-124, HCFC-133a, HFC-134a, HCFC-142b and HFC-152a, are also known in the art and can be prepared by known methods.

It has been found that at least 1 wt. percent and less than about 60 wt. percent of the shrinkage-minimizing halocarbons of this invention can be combined with a minimum of about 40 wt. percent of the two-carbon hydrogen-containing halocarbons of the instant invention to form the mixtures of this invention.

Of the total blowing agent mixture, the effective quantity of CFC-11, CFC-12, HCFC-22, HFC-32, CFC-113, CFC-114, HCFC-124, HCFC-133a, HFC-134a, HCFC-142b and HFC-152a can be at least 1 wt. percent and less than about 60 wt. %, preferably, about 5 to 59 wt. percent, and more preferably, about 10 to 40 wt. percent. The remainder of the mixture is two-carbon hydrogen-containing halocarbons, such as HCFC-123, with the exception of mixtures of CFC-11 and HCFC-123 or HCFC-123a.

CFC-12, HCFC-22, HFC-32, CFC-113, CFC-114, HCFC-124, HCFC-133a, HFC-134a, HCFC-142b and HFC-152a unexpectedly reduce/prevent appreciable cell collapse/shrinkage as compared to a polyurethane foam which has been formed using HCFC-123 as the sole blowing agent.

HCFC-123a and HCFC-141b, used alone, also cause excessive foam cell shrinkage. Mixtures of the two-carbon hydrogen-containing halocarbons can also be used. When up to but less than 60 wt. percent of CFC-11, CFC-12, HCFC-22, HFC-32, CFC-113, CFC-114, HCFC-124, HCFC-133a, HFC-134a, HCFC-142b and/or HFC-152a, either individually or together, are blended with the two-carbon hydrogen-containing halocarbons, either individually or together (with the exception of mixtures of CFC-11 and HCFC-123a), minimal shrinkage closed-cell polyurethane foams can be produced.

The mixtures of the instant invention can be prepared in any manner convenient to the preparer including simply weighing desired quantities of each component and, thereafter, combining them in an appropriate container.

Polyurethane foams are generally prepared by combining a polyol, an isocyanate, a blowing or expanding agent, and other materials such as catalysts and surfactants, to form a polyurethane reaction formulation. Thereafter, the polyurethane reaction formulation is allowed to expand either into an enclosed space or to expand unrestricted. For example, polyurethane foams using the mixture used for the process of the instant invention can be prepared by methods described in US-A-4 411 949.

Based on the weight of the total polyurethane reaction formulation, the effective concentration of CFC-11, CFC-12, HCFC-22, HFC-32, CFC-113, CFC-114, HCFC-124, HCFC-133a, HFC-134a, HCFC-142b and HFC-152a can be about 0.1 to 25 wt. percent, preferably about 0.5 to 15 wt. percent.

The useful concentration range for the mixtures used for the process of the instant invention based on the weight of the polyurethane reaction formulation can be about 1 to 30 wt. percent based on the total polyurethane reaction formulation, with the preferred range being about 5 to 20 wt. percent. Since blowing agents are often dissolved (for handling convenience) in the polyol portion of the polyurethane reaction formulation to prepare "B-side systems", the useful concentration range of the mixture used for the process of the instant invention in the polyol may be about 2-60 wt. percent with the preferred range being about 10-40 wt. percent of the polyol.

EXAMPLES

In order to determine the amount of foam shrinkage which occurs in polyurethane foams using different blowing or expanding agents, samples of foams were prepared by hand mixing and aging, using the three basic polyurethane reaction formulations described in Table I.

Foams were prepared by mixing the indicated quantities of polyol and isocyanate as outlined in Table I for each of the three foam systems studied.

The blowing agents used were generally premixed with the polyol portion of the formulation for convenience. Blowing agents CFC-11, HCFC-123 and HCFC-141b were blended with the appropriate polyol in 473 ml (one pint) glass jars; however, because of the higher pressures (and tendency for blowing agent loss if blended at atmospheric pressure), the other blowing agents evaluated were combined with the appropriate polyol in 237 ml (8-ounce) aerosol cans.

To allow time for a 15 sec. blending of the polyol containing the blowing agent and the isocyanate prior to the start of the reaction exotherm, the polyol and the isocyanate were separately cooled to -10°C prior to mixing.

After cooling to -10°C, the polyol (containing the blowing agent, surfactant and catalyst) was added to the isocyanate and blended for 15 seconds using a high speed air driven mixer.

Foams were prepared by two techniques:

(1) After the 15 sec. mixing, the appliance foam reaction formulation was poured into a 6.4 cm x 33.0 cm x 38.1 cm (2-1/2" x 13" x 15") mold (heated to 60°C (140°F)) and allowed to expand and fill the closed mold.

(2) After the 15 sec. mixing, the board stock reaction formulation was poured into a 4.7 l (5-qt.) paint can liner and allowed to rise freely.

After allowing the foam samples to cure and cool to ambient temperature, the amount of shrinkage was determined as described below.

In the free rise samples, a center section 7.6 cm x 7.6 cm x 10.2 cm (3" x 3" x 4")) was removed for observation. All shrinkage measurements were made a minimum of 72 hours after foam formation.

Table II shows typical quantities of ingredients required for preparing a foam sample in the 6.4 cm x 33.0 cm x 38.1 cm (2-1/2" x 13" x 15") closed mold.

Table III shows shrinkage data.

Shrinkage Measurement

(A) 6.4 cm x 33.0 cm x 38.1 cm (2-1/2" X 13" X 15") Closed Mold: Because foam shrinkage can be non-uniform, varying from irregular concave areas on sides of the foam blocks to significant volume contractions at the tops of the foam blocks, estimation of volume is difficult. Thus, a water immersion technique was developed. In this technique, the increased amount of water required to fill a plastic chamber containing the shrunken foam block versus the foam block exhibiting no shrinkage is a measure of the volume loss or shrinkage occurring after a given period of time.

The amount of shrinkage was calculated using the following formula:

$$E = \frac{B - D}{B} \times 100 = \text{percent shrinkage}$$

where

A = Volume of chamber to overflow
B = Original Volume of foam block before shrinkage occurs
C = Volume of water required to fill chamber to overflow with shrunken block in place
D = A - C = Volume of shrunken block

The following is the Result of sample calculation with the indicated values:

| A | B | C | D | E |
|---|---|---|---|---|
| 9953 ml | 8255 ml | 2378 ml | 7575 ml | 8.3% |

(B) 7.6 cm x 7.6 cm x 10.2 cm (3" X 3" X 4") Free Rise: Just as with the closed mold tests, the water immersion technique was used for determining shrinkage of the center sections (7.6 cm x 7.6 cm x 10.2 cm (3" X 3" X 4")) for free rise foam samples after a given period of time.

The amount of shrinkage was calculated using the following formula:

$$E = \frac{B - D}{B} \times 100 = \text{percent shrinkage}$$

where

A = Volume of chamber to overflow
B = Original Volume of foam block before shrinkage occurs
C = Volume of water required to fill chamber to overflow with shrunken block in place
D = A - C = Volume of shrunken block

The following is the result of a sample calculation with the indicated values:

| A | B | C | D | E |
|---|---|---|---|---|
| 4000 ml | 3300 ml | 950 ml | 3050 ml | 7.5% |

EP 0 330 988 B1

## TABLE I

### POLYURETHANE SYSTEMS

| Polyurethane System | Foam Application | Iso-cyanate Index* | Polyol Type | Polyol Eq.Wt. | Iso-cyanate Type | Iso-cyanate Eq.Wt. | Comments |
|---|---|---|---|---|---|---|---|
| I | Appliance (pour-in-place) | 105 | Poly-ether | 133.6 | MDI | 134.0 | Polyol contains 1.43 percent water |
| II | Appliance | 100** | Poly-ether | 118.0 | TDI (modified) | 124.0 | Polyol contains 0.85 percent water |
| III | Insulating board stock (isocyanurate) | 250 | Poly-ester | 140.2 | MDI | 136.0 | |

* The number of equivalents of isocyanates per equivalent of hydroxyl in the polyol multiplied by 100.
** Approximate

## TABLE II

### TYPICAL FOAM FORMULATIONS

| Blowing Agent | Quantity g. | Polyurethane System | Polyol, g. | Isocyanate, g. | Blowing Agent Molecular Weight |
|---|---|---|---|---|---|
| CFC-11 | 44.0 | I | 100.0 | 122.7 | 137.4 |
| HCFC-123 | 49.0 | I | 100.0 | 122.7 | 153.0 |
| HCFC-141b | 37.4 | I | 100.0 | 122.7 | 116.9 |
| CFC-114 | 54.7 | I | 100.0 | 122.7 | 170.9 |

# TABLE III

## POLYURETHANE FOAM PREPARATION

| POLYURETHANE SYSTEM (TABLE I) - I | | | FOAM PREPARATION PROCEDURE - CLOSED MOLD | | |
|---|---|---|---|---|---|
| Blowing Agent A     B | % B in A+B | % A+B in Polymer | Moles A&B in CWT Polymer | Foam Density #/cu.ft.* | % Volume Shrinkage |
| 11     - | - | 16.5 | 0.144 | 1.90 | 0 |
| 123     - | - | 17.8 | 0.142 | 2.13 | 35 |

* 1 pound per cubic foot (= #/cu.ft.)=1.6 x $10^{-2}$ g/cm$^3$

## TABLE III

### POLYURETHANE FOAM PREPARATION

| POLYURETHANE SYSTEM (TABLE I) - I | | | | FOAM PREPARATION PROCEDURE - CLOSED MOLD | | |
|---|---|---|---|---|---|---|
| Blowing Agent | | % B in | % A+B in | Moles A&B in CWT | Foam Dens-ity | % Volume Shrink- |
| A | B | A+B | Polymer | Polymer | #/cu.ft.* | age |
| 123 | - | - | 17.8 | 0.142 | 2.13 | 35 |
| 123 | 12 | 5.0 | 17.7 | 0.142 | 2.15 | 7.2 |
| 123 | 12 | 10.0 | 17.5 | 0.142 | 1.96 | 5 |
| 123 | 12 | 15.0 | 17.3 | 0.142 | 2.01 | 2.9 |
| 123 | 12 | 20.0 | 17.1 | 0.142 | 1.95 | 1.3 |

### TABLE III

### POLYURETHANE FOAM PREPARATION

| POLYURETHANE SYSTEM (TABLE I) - I | | | | FOAM PREPARATION PROCEDURE - CLOSED MOLD | | |
|---|---|---|---|---|---|---|
| Blowing Agent | | % B in | % A+B in | Moles A&B in CWT | Foam Dens-ity | % Volume Shrink- |
| A | B | A+B | Polymer | Polymer | #/cu.ft.* | age |
| 123 | - | - | 17.8 | 0.142 | 2.13 | 35 |
| 123 | 22 | 5.0 | 17.3 | 0.142 | 2.01 | 15 |
| 123 | 22 | 10.0 | 16.8 | 0.142 | 2.10 | 3 |
| 123 | 22 | 20.0 | 16.0 | 0.142 | 2.23 | 2.2 |

* 1 #/cu.ft. = $1.6 \times 10^{-2} \text{g/cm}^3$

9

## TABLE III

## POLYURETHANE FOAM PREPARATION

| POLYURETHANE SYSTEM (TABLE I) - I | | | | FOAM PREPARATION PROCEDURE - CLOSED MOLD | | |
|---|---|---|---|---|---|---|
| Blowing Agent A | B | % B in A+B | % A+B in Polymer | Moles A&B in CWT Polymer | Foam Density #/cu.ft.* | % Volume Shrink-age |
| 123 | - | - | 17.8 | 0.142 | 2.13 | 35 |
| 123 | 114 | 5.0 | 17.9 | 0.142 | 2.15 | 9 |
| 123 | 114 | 12.0 | 18.0 | 0.142 | 2.13 | 4.2 |
| 123 | 114 | 15.0 | 18.1 | 0.142 | 2.14 | 2.3 |
| 123 | 114 | 20.0 | 18.2 | 0.142 | 2.14 | 1 |

## TABLE III

## POLYURETHANE FOAM PREPARATION

| POLYURETHANE SYSTEM (TABLE I) - I | | | | FOAM PREPARATION PROCEDURE - CLOSED MOLD | | |
|---|---|---|---|---|---|---|
| Blowing Agent A | B | % B in A+B | % A+B in Polymer | Moles A&B in CWT Polymer | Foam Density #/cu.ft.* | % Volume Shrink-age |
| 123 | - | - | 17.8 | 0.142 | 2.13 | 35 |
| 123 | 124 | 20.0 | 17.5 | 0.142 | 2.01 | 0.3 |
| 123 | 134a | 20.0 | 16.5 | 0.142 | 1.90 | 2.4 |
| 123 | 142b | 20.0 | 16.4 | 0.142 | 2.16 | 0 |
| 123 | 152a | 20.0 | 14.7 | 0.142 | 2.15 | 0.9 |

* 1 #/cu.ft. = $1.6 \times 10^{-2} g/cm^3$

## TABLE III

### POLYURETHANE FOAM PREPARATION

| POLYURETHANE SYSTEM (TABLE I) - I | | | | FOAM PREPARATION PROCEDURE - CLOSED MOLD | | |
|---|---|---|---|---|---|---|
| Blowing Agent | | % B in | % A+B in | Moles A&B in CWT | Foam Dens- ity | % Volume Shrink- |
| A | B | A+B | Polymer | Polymer | #/cu.ft.* | age |
| 11 | - | - | 16.5 | 0.144 | 1.90 | 0 |
| 11 | - | - | 24.1 | 0.231 | 1.35 | 0.8 |
| 141b | - | - | 20.1 | 0.215 | 1.40 | 44 |
| 141b | 11 | 20.0 | 20.6 | 0.215 | 1.42 | 3.2 |

## TABLE III

### POLYURETHANE FOAM PREPARATION

| POLYURETHANE SYSTEM (TABLE I) - I | | | | FOAM PREPARATION PROCEDURE - CLOSED MOLD | | |
|---|---|---|---|---|---|---|
| Blowing Agent | | % B in | % A+B in | Moles A&B in CWT | Foam Dens- ity | % Volume Shrink- |
| A | B | A+B | Polymer | Polymer | #/cu.ft.* | age |
| 141b | - | - | 20.1 | 0.215 | 1.40 | 44 |
| 141b | 12 | 20.0 | 20.2 | 0.215 | 1.31 | 22 |
| 141b | 12 | 40.0 | 20.3 | 0.215 | 1.46 | 3.5 |

* 1 #/cu.ft. = 1.6 × $10^{-2}$ g/cm$^3$

## TABLE III

### POLYURETHANE FOAM PREPARATION

| POLYURETHANE SYSTEM (TABLE I) - I | | | | FOAM PREPARATION PROCEDURE - CLOSED MOLD | | |
|---|---|---|---|---|---|---|
| Blowing Agent | | % B in | % A+B in | Moles A&B in CWT | Foam Density | % Volume Shrink- |
| A | B | A+B | Polymer | Polymer | #/cu.ft.* | age |
| 141b | - | - | 20.1 | 0.215 | 1.40 | 44 |
| 141b | 22 | 5.0 | 19.8 | 0.215 | 1.42 | 43 |
| 141b | 22 | 10.0 | 19.5 | 0.215 | 1.33 | 39 |
| 141b | 22 | 20.0 | 19.0 | 0.215 | 1.43 | 16 |
| 141b | 22 | 40.0 | 18.0 | 0.215 | 1.32 | 9.4 |

## TABLE III

### POLYURETHANE FOAM PREPARATION

| POLYURETHANE SYSTEM (TABLE I) - I | | | | FOAM PREPARATION PROCEDURE - CLOSED MOLD | | |
|---|---|---|---|---|---|---|
| Blowing Agent | | % B in | % A+B in | Moles A&B in CWT | Foam Density | % Volume Shrink- |
| A | B | A+B | Polymer | Polymer | #/cu.ft.* | age |
| 141b | - | - | 20.1 | 0.215 | 1.40 | 44 |
| 141b | 114 | 20.0 | 21.2 | 0.215 | 1.44 | 20 |
| 141b | 114 | 40.0 | 21.4 | 0.215 | 1.34 | 2.7 |

* 1 #/cu.ft. = $1.6 \times 10^{-2}$ g/cm$^3$

## TABLE III

## POLYURETHANE FOAM PREPARATION

| POLYURETHANE SYSTEM (TABLE I) - I | | | | FOAM PREPARATION PROCEDURE - CLOSED MOLD | | |
|---|---|---|---|---|---|---|
| Blowing Agent | % B in | % A+B in | Moles A&B in CWT | Foam Dens- ity | % Volume Shrink- |
| A      B | A+B | Polymer | Polymer | #/cu.ft.* | age |
| 141b   - | - | 20.1 | 0.215 | 1.40 | 44 |
| 141b  124 | 20.0 | 20.6 | 0.215 | 1.43 | 8.8 |
| 141b  134a | 20.0 | 19.6 | 0.215 | 1.36 | 4.7 |
| 141b  142b | 20.0 | 19.6 | 0.215 | 1.39 | 2.3 |
| 141b  152a | 20.0 | 17.9 | 0.215 | 1.32 | 5.3 |

\* 1 #/cu.ft. = 1.6 x $10^{-2}$ g/cm$^3$

## TABLE III

## POLYURETHANE FOAM PREPARATION

| POLYURETHANE SYSTEM (TABLE I) – II | | | | FOAM PREPARATION PROCEDURE – CLOSED MOLD | | |
|---|---|---|---|---|---|---|
| Blowing Agent | | % B in | % A+B in | Moles A&B in CWT | Foam Density | % Volume Shrink- |
| A | B | A+B | Polymer | Polymer | #/cu.ft.* | age |
| 11 | – | – | 16.4 | 0.144 | 1.37 | 0 |
| 123 | – | – | 21.5 | 0.180 | 1.77 | 3 |

* 1 #/cu.ft. = 1.6 $\times$ 10$^{-2}$ g/cm$^3$

## TABLE III

## POLYURETHANE FOAM PREPARATION

| POLYURETHANE SYSTEM (TABLE I) - II | | | | FOAM PREPARATION PROCEDURE - CLOSED MOLD | | |
|---|---|---|---|---|---|---|
| Blowing Agent | | % B in | % A+B in | Moles A&B in CWT | Foam Dens- ity | % Volume Shrink- |
| A | B | A+B | Polymer | Polymer | #/cu.ft.* | age |
| 123 | – | – | 23.4 | 0.200 | 1.59 | 16.1 |
| 123 | 12 | 10.0 | 22.9 | 0.200 | 1.53 | 3.7 |
| 123 | 22 | 10.0 | 22.2 | 0.200 | 1.53 | 5.1 |
| 123 | 114 | 10.0 | 23.6 | 0.200 | 1.60 | 8.8 |
| 123 | 124 | 10.0 | 23.2 | 0.200 | 1.61 | 0 |
| 123 | 134a | 10.0 | 22.6 | 0.200 | 1.49 | 0.8 |
| 123 | 142b | 10.0 | 22.5 | 0.200 | 1.58 | 0 |
| 123 | 152a | 10.0 | 21.3 | 0.200 | 1.50 | 2.1 |

* 1 #/cu.ft. = $1.6 \times 10^{-2} g/cm^3$

## TABLE III

## POLYURETHANE FOAM PREPARATION

| POLYURETHANE SYSTEM (TABLE I) - II | | | | FOAM PREPARATION PROCEDURE - CLOSED MOLD | | |
|---|---|---|---|---|---|---|
| Blowing Agent | | % B in | % A+B in | Moles A&B in CWT | Foam Density | % Volume Shrink- |
| A | B | A+B | Polymer | Polymer | $/cu.ft.* | age |
| 141b | - | - | 18.9 | 0.390 | 1.41 | 15 |
| 141b | 11 | 10.0 | 19.2 | 0.391 | 1.42 | 4.8 |
| 141b | 12 | 10.0 | 19.0 | 0.391 | 1.37 | 9.5 |
| 141b | 22 | 10.0 | 18.4 | 0.391 | 1.40 | 3.5 |
| 141b | 114 | 10.0 | 19.5 | 0.391 | 1.47 | 2.8 |
| 141b | 124 | 10.0 | 19.2 | 0.391 | 1.46 | 1.8 |
| 141b | 134a | 10.0 | 18.7 | 0.391 | 1.42 | 6 |
| 141b | 142b | 10.0 | 18.7 | 0.391 | 1.39 | 5.7 |

* 1 #/cu.ft. = $1.6 \times 10^{-2} g/cm^3$

## TABLE III

## POLYURETHANE FOAM PREPARATION

| POLYURETHANE SYSTEM (TABLE I) - III | | | | FOAM PREPARATION PROCEDURE - FREE RISE | | |
|---|---|---|---|---|---|---|
| Blowing Agent | | % B in | % A+B in | Moles A&B in CWT | Foam Dens- ity | % Volume Shrink- |
| A | B | A+B | Polymer | Polymer | #/cu.ft.* | age |
| 11 | - | - | 19.8 | 0.180 | 1.52 | 0 |
| 123 | - | - | 21.6 | 0.180 | 1.42 | 33 |

* 1 #/cu.ft. = $1.6 \times 10^{-2} g/cm^3$

## TABLE III

### POLYURETHANE FOAM PREPARATION

| POLYURETHANE SYSTEM (TABLE I) - III | | | FOAM PREPARATION PROCEDURE - FREE RISE | | |
|---|---|---|---|---|---|
| Blowing Agent | % B in | % A+B in | Moles A&B in CWT | Foam Density | % Volume Shrink- |
| A    B | A+B | Polymer | Polymer | #/cu.ft.* | age |
| 141b  - | - | 17.4 | 0.180 | 1.54 | 34 |
| 141b  11 | 20.0 | 17.8 | 0.180 | 1.71 | 0.2 |

## TABLE III

### POLYURETHANE FOAM PREPARATION

| POLYURETHANE SYSTEM (TABLE I) - III | | | FOAM PREPARATION PROCEDURE - FREE RISE | | |
|---|---|---|---|---|---|
| Blowing Agent | % B in | % A+B in | Moles A&B in CWT | Foam Density | % Volume Shrink- |
| A    B | A+B | Polymer | Polymer | #/cu.ft.* | age |
| 141b  - | - | 17.4 | 0.180 | 1.54 | 34 |
| 141b  124 | 20.0 | 19.4 | 0.180 | 1.37 | 9.1 |
| 141b  142b | 20.0 | 18.5 | 0.180 | 1.38 | 5.9 |
| 141b  152a | 20.0 | 16.8 | 0.180 | 1.44 | 10.5 |

$$* \ 1 \ \#/cu.ft. = 1.6 \times 10^{-2} g/cm^3$$

## Claims

1. A process comprising
      mixing at least 1 wt. percent and less than 60 wt. percent of a shrinkage-minimizing halocarbon selected from the group consisting of CFC-11, CFC-12, HCFC-22, HFC-32, CFC-113, CFC-114, HCFC-124, HCFC-133a, HFC-134a, HCFC-142b and HFC-152a, and a minimum of about 40 wt. percent of a two-carbon hydrogen-containing halocarbon selected from the group consisting of HCFC-123, HCFC-123a and HCFC-141b, to form a mixture with the exception of mixtures of CFC-11 and HCFC-123 or HCFC-123a, and, thereafter,

using the mixture to produce a minimal shrinkage closed-cell polyurethane foam.

2. The process of Claim 1 wherein the mixture is first dissolved in a polyol containing a surfactant and catalyst to form a B-side system which is, in turn, reacted with isocyanates to produce said polyurethane foam, said mixture comprising 2 to 60 wt. percent of the B-side system.

3. The process of Claim 1 wherein the mixture is combined with surfactant and an isocyanate to form one component and, thereafter, the component is reacted with a polyol and a catalyst to produce said closed-cell polyurethane foam.

4. The process of Claim 1 wherein the mixture comprises 5 to 59 wt. percent of the shrinkage-minimizing halocarbon and 95 to 41 wt. percent of the two-carbon hydrogen-containing halocarbon.

5. The process of Claim 4 wherein the mixture comprises 10 to 40 wt. percent of the shrinkage-minimizing halocarbon and 90 to 60 wt. percent of the two-carbon hydrogen-containing halocarbon.

6. The process of Claim 1 wherein the shrinkage-minimizing halocarbon comprises 0.1 to 25 wt. percent, preferably 0.5 to 15 wt. percent of the polyurethane reaction formulation.

7. The process of Claim 1 wherein the polyurethane foam has a density of $2.4 \times 10^{-2}$ to $4.0 \times 10^{-2}$ g/cm$^3$ (1.5 to 2.5 pounds per cubic foot).

8. The process of Claim 1 wherein the polyurethane foam has a density of $1.9 \times 10^{-2}$ to $2.4 \times 10^{-2}$ g/cm$^3$ (1.2 to 1.5 pounds per cubic foot).

9. A polyurethane foam prepared by the process of Claim 1.

**Patentansprüche**

1. Ein Verfahren, umfassend

Mischen von mindestens 1 Gewichtsprozent und weniger als 60 Gewichtsprozent eines schrumpfungsminimierenden Halogenkohlenwasserstoffs, ausgewählt aus der Gruppe, bestehend aus CFC-11, CFC-12, HCFC-22, HFC-32, CFC-113, CFC-114, HCFC-124, HCFC-133a, HFC-134a, HCFC-142b und HFC-152a, und von einem Minimum von etwa 40 Gewichtsprozent eines Wasserstoff enthaltenden Zwei-Kohlenstoff-Halogenkohlenwasserstoffs, ausgewählt aus der Gruppe, bestehend aus HCFC-123, HCFC-123a und HCFC-141b, um eine Mischung zu bilden, mit der Ausnahme von Mischungen aus CFC-11 und HCFC-123 oder HCFC-123a, und danach

Verwendung der Mischung, um einen geschlossenzelligen Polyurethanschaumstoff mit minimaler Schrumpfung herzustellen.

2. Das Verfahren nach Anspruch 1, worin die Mischung zuerst in einem Polyol gelöst wird, das ein grenzflächenaktives Mittel und einen Katalysator enthält, um ein B-Seite-System zu bilden, das dann mit Isocyanaten umgesetzt wird, um den Polyurethanschaumstoff herzustellen, wobei die Mischung 2 bis 60 Gewichtsprozent des B-Seite-Systems umfaßt.

3. Das Verfahren nach Anspruch 1, worin die Mischung mit grenzflächenaktivem Mittel und einem Isocyanat vereinigt wird, um eine Komponente zu bilden, und danach die Komponente mit einem Polyol und einem Katalysator umgesetzt wird, um den geschlossenzelligen Polyurethanschaumstoff herzustellen.

4. Das Verfahren nach Anspruch 1, worin die Mischung 5 bis 59 Gewichtsprozent des schrumpfungsminimierenden Halogenkohlenwasserstoffs und 95 bis 41 Gewichtsprozent des Wasserstoff enthaltenden Zwei-Kohlenstoff-Halogenkohlenwasserstoffs umfaßt.

**5.** Das Verfahren nach Anspruch 4, worin die Mischung 10 bis 40 Gewichtsprozent des schrumpfungsminimierenden Halogenkohlenwasserstoffs und 90 bis 60 Gewichtsprozent des Wasserstoff enthaltenden Zwei-Kohlenstoff-Halogenkohlenwasserstoffs umfaßt.

**6.** Das Verfahren nach Anspruch 1, worin der schrumpfungsminimierende Halogenkohlenwasserstoff 0,1 bis 25 Gewichtsprozent, vorzugsweise 0,5 bis 15 Gewichtsprozent, der Polyurethanreaktionsformulierung umfaßt.

**7.** Das Verfahren nach Anspruch 1, worin der Polyurethanschaumstoff ein Dichte von $2,4 \times 10^{-2}$ bis $4,0 \times 10^{-2}$ g/cm$^3$ (1,5 bis 2,5 Pfund pro Kubikfuß) hat.

**8.** Das Verfahren nach Anspruch 1, worin der Polyurethanschaumstoff eine Dichte von $1,9 \times 10^{-2}$ bis $2,4 \times 10^{-2}$ g/cm$^3$ (1,2 bis 1,5 Pfund pro Kubikfuß) hat.

**9.** Ein nach dem Verfahren nach Anspruch 1 hergestellter Polyurethanschaumstoff.

**Revendications**

**1.** Un procédé consistant à

mélanger au moins 1 pour cent en poids et moins de 60 pour cent en poids d'un halogénocarbure minimisant le retrait, choisi dans le groupe formé par CFC-11, CFC-12, HCFC-22, HFC-32, CFC-113, CFC-114, HCFC-124, HCFC-133a, HFC-134a, HCFC-142b et HFC-152a, et un minimum d'environ 40 pour cent en poids d'un halogénocarbure hydrogéné à deux atomes de carbone choisi dans le groupe formé par HCFC-123, HCFC-123a et HCFC-141b, pour former un mélange, à l'exception des mélanges de CFC-11 et HCFC-123 ou HCFC-123a, puis

utiliser le mélange pour produire une mousse de polyuréthanne à cellules fermées ayant un retrait minimal.

**2.** Le procédé de la revendication 1, dans lequel le mélange est d'abord dissous dans un polyol contenant un agent tensio-actif et un catalyseur pour former un système de composant B qui est lui-même amené à réagir avec des isocyanates pour produire ladite mousse de polyuréthanne, ledit mélange constituant 2 à 60 pour cent en poids du système de composant B.

**3.** Le procédé de la revendication 1, dans lequel le mélange est combiné avec un agent tensio-actif et un isocyanate pour former un composant, puis le composant est amené à réagir avec un polyol et un catalyseur pour produire ladite mousse de polyuréthanne à cellules fermées.

**4.** Le procédé de la revendication 1, dans lequel le mélange comprend 5 à 59 pour cent en poids de l'halogénocarbure minimisant le retrait et 95 à 41 pour cent en poids de l'halogénocarbure hydrogéné à deux atomes de carbone.

**5.** Le procédé de la revendication 4, dans lequel le mélange comprend 10 à 40 pour cent en poids de l'halogénocarbure minimisant le retrait et 90 à 60 pour cent en poids de l'halogénocarbure hydrogéné à deux atomes de carbone.

**6.** Le procédé de la revendication 1, dans lequel l'halogénocarbure minimisant le retrait constitue 0,1 à 25 pour cent en poids, de préférence 0,5 à 15 pour cent en poids, de la formulation réactionnelle de polyuréthanne.

**7.** Le procédé de la revendication 1, dans lequel la mousse de polyuréthanne a une masse volumique de $2,4 \times 10^{-2}$ à $4,0 \times 10^{-2}$ g/cm$^3$.

**8.** Le procédé de la revendication 1, dans lequel la mousse de polyuréthanne a une masse volumique de $1,9 \times 10^{-2}$ à $2,4 \times 10^{-2}$ g/cm$^3$.

**9.** Une mousse de polyuréthanne préparée par le procédé de la revendication 1.